# EUROPÄISCHE PATENTSCHRIFT

(11) **EP 1 083 072 B1**
(45) Veröffentlichungstag und Bekanntmachung des Hinweises auf die Patenterteilung: **17.03.2004**
(21) Anmeldenummer: 00115195.0
(22) Anmeldetag: 13.07.2000
(51) Int. Cl.: B60K 11/04, F01P 3/18

(54) **Kühleinrichtung für eine Brennkraftmaschine**
Cooling system for a combustion engine
Dispositif de refroidissement pour un moteur à combustion

(30) Priorität: 09.09.1999 DE 19943002
(43) Veröffentlichungstag der Anmeldung: 14.03.2001
(73) Patentinhaber: Dr.Ing. h.c.F. Porsche Aktiengesellschaft, 70435 Stuttgart (DE)
(72) Erfinder: Schneider, Klaus, 75233 Tiefenbronn (DE)

(56) Entgegenhaltungen:
- DE-A- 19 937 604
- US-A- 4 723 594
- US-A- 4 953 631
- US-A- 5 915 490

## Beschreibung

Die Erfindung betrifft eine Kühleinrichtung für eine Brennkraftmaschine, eingebaut in ein Kraftfahrzeug, insbesondere Personenkraftwagen, nach dem Oberbegriff des Patentanspruchs 1.

Es ist eine Kühleinrichtung der eingangs genannten Gattung bekannt, DE 39 30 076 C1, die im Bugraum eines Kraftfahrzeugs angeordnet ist, und zwar in Fahrtrichtung gesehen vor einem von einer Brennkraftmaschine angetriebenen Kühlluftgebläse. Die Kühleinrichtung umfaßt zwei Kühler, wovon der eine Kühler schräg und der andere Kühler aufrecht im Bugraum des Kraftfahrzeugs angeordnet ist.

In der DE 36 11 713 C1 wird eine Kühleinrichtung in einem Kraftfahrzeug beschrieben, die einen Kühler und einen Nebenkühler aufweist. Beide Kühler stehen mit Abstand zueinander und aufrecht in einem Bugraum des Kraftfahrzeugs.

Aufgabe der Erfindung ist es, eine mehrerer Kühler umfassende Kühleinrichtung für ein Kraftfahrzeug zu schaffen, die hochwirksam ist und sich bei vertretbarem Raumanspruch in den Bug des Kraftfahrzeugs einbauen läßt.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß die Kühleinrichtung drei den Bugraum gut ausnützende Kühler aufweist, die eine effiziente Kühlleistung für die Brennkraftmaschine sicherstellen. Dazu ermöglichen die Kühlwasseraustrittsleitungen, die Sammeleinrichtung, die Zuführungsleitung, die Rückführungsleitung, die Verzweigung und die Kühlwasserrückführungsleitungen einen funktionsgerechten Kühlwasserkreislauf, und zwar nicht nur für eine im Bug, sondern auch im Heck bzw. nahe dem Heck - Mittelmotor-Bauart - eines Kraftfahrzeugs angeordnete Brennkraftmaschine. Die Zylinderzuführungsleitungen sind von der Wasserpumpe aus auf übersichtliche Weise zu den Zylinderreihen hin verlegt. Schließlich ist von der Wasserpumpe eine Nebenzuführungsleitung weggeführt, mit der ein Wärmetauscher zur Kühlung von Motoröl mit Kühlmedium versorgt wird. Diese unabhängig von den Zylindern wirkende Wärmetauscherkühlung gewährleistet eine gleichmäßige Kühlwasserzuführung zu den beiden Zylinderreihen.

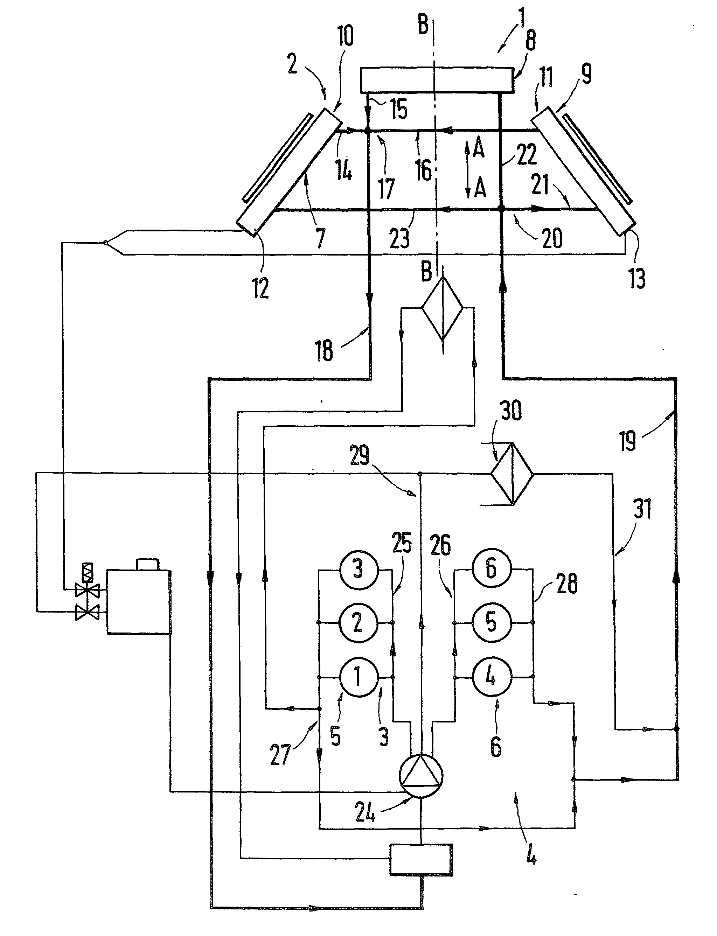

Nachfolgend wird die Erfindung anhand einer Zeichnung, die eine einzige Figur umfaßt, erläutert. Diese Figur gibt eine schematische Ansicht eines Kraftfahrzeugs von oben wieder.

In einem Bug 1 eines nicht näher dargestellten Kraftfahrzeugs ist eine Kühleinrichtung 2 für eine Brennkraftmaschine 3 vorgesehen. Die Brennkraftmaschine 3 kann in einem Heck 4 oder benachbart von diesem - Mittelmotor-Bauart - im Kraftfahrzeug angeordnet sein, und sie weist gegenüberliegende Zylinderreihen 5 und 6 auf. Die Kühleinrichtung wird durch mehrere Kühler 7, 8 und 9 gebildet. Der Kühler 8 erstreckt sich quer zur Fahrzeuglängsrichtung A-A, wogegen die Kühler 7 und 9 schräg zu einer Mittellängsebene B-B des Kraftfahrzeugs verlaufen, dergestalt, daß sie mit ihren Vorderseiten 10, 11 näher an der Mittellängsebene B-B liegen als mit ihren Rückseiten 12, 13. Die Kühler 7, 8 und 9 sind mit Kühlwasseraustrittsleitungen 14, 15 und 16 an eine Sammeleinrichtung 17 angeschlossen, die unter Vermittlung einer Zuführungsleitung 18, mit Zylindern der beiden Zylinderreihen 5, 6 der Brennkraftmaschine 3 verbunden ist. Den Zylindern der Brennkraftmaschine 3 nachgeschaltet ist eine Rückführungsleitung 19, die zu einer Verzweigungseinrichtung 20 führt. Zwischen der Verzweigungseinrichtung 20 und den Kühlern 7, 8 und 9 sind Kühlwasserrückführungsleitungen 21, 22 und 23 verlegt. Im Ausführungsbeispiel sind die Kühlwasseraustrittsleitungen 14, 15 und 16 und die Sammeleinrichtung 17 benachbart dem Kühler 8 angeordnet; die Kühlwasseraustrittsleitungen 14, 15 und 16 sowie die Verzweigungseinrichtung 20 mit Abstand hierzu. In die Zuführungsleitung 18 ist eine Wasserpumpe 24 geschaltet, die für die Kühlwasserzirkulation zwischen Kühleinrichtung 2 und den Zylinderreihen sorgt. Dabei sind stromab hinter der Wasserpumpe 24 getrennte Zylinderzuführungsleitungen 25 und 26 vorgesehen, über die Kühlmedium zu den einzelnen Zylindern der Zylinderreihen 5, 6 strömt. Die Zylinderzuführungsleitungen 25 und 26 erstrecken sich zwischen den Zylinderreihen 5, 6. Außerhalb der Zylinderreihen 5, 6 d.h. auf der den Zylinderzuführungsleitungen 25 und 26 abgekehrten Seiten sind Kühlwasseraustrittsleitungen 27 und 28 verlegt, die mit der Rückführungsleitung 19 verbunden sind.

Von der Wasserpumpe 24 weggeführt ist eine Nebenzuführungsleitung 29, die mit einem zum Kühlen von Motoröl dienenden Wärmetauscher 30 verbunden ist. Auf einer der Nebenzuführungsleitung 29 abgekehrten Seite des Wärmetauschers 30 ist eine Kühlwasseraustrittsleitung 31 vorgesehen, die mit der Rückführungsleitung 19 verbunden ist.

## Patentansprüche

1. Kühleinrichtung (2) für eine Brennkraftmaschine (3), eingebaut in ein Kraftfahrzeug, insbesondere Personenkraftwagen, welche Kühleinrichtung (2) mehrere in einem Bug (1) des Personenkraftwagens angoeordnete Kühler (7,8,9) aufweist, die mit der Brennkraftmaschine (3) über Leitungen verbunden sind, **dadurch gekennzeichnet, daß** die Kühleinrichtung (2) im Bug (1 ) einen quer zur Fahrzeuglängsrichtung (A - A) verlaufenden und zwei seitliche schräg zu einer Mittellängsebene (B - B) sich erstreckende Kühler (7, 8 und 9) umfaßt, wobei die Kühler (7, 8 und 9) unter Vermittlung einer Sammeleinrichtung (17) mit Kühlwasseraustrittsleitungen (14, 15 und 16) an eine gemeinsame mit der Brennkraftmaschine verbundene Zuführungsleitung (18) angeschlossen sind und daß darüber hinaus der Brennkraftmaschine eine Rückführungsleitung (19) nachgeschaltet ist, die an eine Verzweigungseinrichtung (20) angeschlossen ist, von der aus Kühlwasserrückführungsleitungen (21, 22 und 23) zu den Kühlern (7, 8 und 9) verlegt sind.

2. Kühleinrichtung nach Anspruch 1, **dadurch gekennzeichnet, daß** die Kühlwasseraustrittsleitungen (14, 15 und 16) und die Sammeleinrichtung (17) benachbart dem mittleren Kühler (8) verlaufen, wogegen die Kühlwasserrückführungsleitungen (14, 15 und 16) und die Verzweigungseinrichtung (20) beabstandet zu den Kühlwasseraustrittsleitungen (14,15 und 16) und der Sammeleinrichtung (17) verlaufen.

3. Kühleinrichtung für eine Brennkraftmaschine nach einem oder mehreren der vorangehenden Ansprüche mit gegenüberliegenden Zylinderreihen (5,6) und einer das Kühlwasser der Kühleinrichtung fördernder Wasserpumpe (24), **dadurch gekennzeichnet, daß** die Wasserpumpe (24) in die Zuführungsleitung (18) geschaltet ist, wobei stromab hinter der Wasserpumpe (24) getrennte Zylinderzuführungsleitungen (22 und 23) für die Zylinderreihen (5,6) vorgesehen sind, welche Zylinderzuführungsleitungen (22 und 23) sich zwischen den Zylinderreihen (5 und 6) erstrecken.

4. Kühleinrichtung nach Anspruch 3, **dadurch gekennzeichnet, daß** außerhalb der Zylinderreihen (5, 6) Kühlwasseraustrittsleitungen (27, 28) verlegt sind, die mit der Rückführungsleitung (19) verbunden sind.

5. Kühleinrichtung nach einem oder mehreren der vorangehenden Ansprüche 3 oder 4, **dadurch gekennzeichnet, daß** von der Wasserpumpe (24) eine Nebenzuführungsleitung (29) weggeführt ist, die mit einem Wärmetauscher (30) verbunden ist.

6. Kühleinrichtung nach Anspruch 5, **dadurch gekennzeichnet, daß** der Wärmetauscher (30) zur Kühlung von Motoröl der Brennkraftmaschine (3) ausgebildet ist.

7. Kühleinrichtung nach einem oder mehreren der vorangehenden Ansprüche 5 der 6, **dadurch gekennzeichnet, daß** der Wärmetauscher (30) eine Kühlwasseraustrittsleitung (31) umfaßt, die an die Rückführungsleitung (19) angeschlossen ist.

## Claims

1. A cooling device (2) for an internal-combustion engine (3), fitted in a motor vehicle, in particular a passenger car, which cooling device (2) comprises a plurality of radiators (7, 8, 9) which are arranged in a front structure (1) of the passenger car and which are connected to the internal-combustion engine (3) by way of lines, **characterized in that** the cooling device (2) in the front structure (1) comprises radiators (7, 8 and 9), one extending transversely to the longitudinal direction (**A-A**) of the vehicle and two lateral ones extending obliquely to a median longitudinal plane (**B-B**), wherein the radiators (7, 8 and 9) are attached with the interposition of a collector device (17) with cooling-water outlet lines (14, 15 and 16) to a common supply line (18) connected to the internal-combustion engine, and, in addition, the internal-combustion engine has connected downstream of it a return device (19) which is attached to a branch line (20) from which cooling-water return lines (21, 22 and 23) to the radiators (7, 8 and 9) are arranged.

2. A cooling device according to Claim 1, **characterized in that** the cooling-water outlet lines (14, 15 and 16) and the collector device (17) extend adjacent to the middle radiator (8), whereas the cooling-water return lines (14, 15 and 16) and the branch device (20) extend at a distance from the cooling-water outlet lines (14, 15 and 16) and the collector device (17).

3. A cooling device for an internal-combustion engine according to one or more of the preceding Claims, with opposed rows of cylinders (5, 6) and a water pump (24) which conveys the cooling water of the cooling device, **characterized in that** the water pump (24) is arranged in the supply line (18), wherein separate cylinder-supply lines (22 and 23) for the rows of cylinders (5, 6) are provided downstream behind the water pump (24), the cylinder-supply lines (22 and 23) extending between the rows of cylinders (5 and 6).

4. A cooling device according to Claim 3, **characterized in that** cooling-water outlet lines (27, 28), which are connected to the return line (19), are arranged outside the rows of cylinders (5, 6).

5. A cooling device according to one or more of the preceding Claims 3 or 4, **characterized in that** a subsidiary supply line (29), which is connected to a heat exchanger (30), extends from the water pump (24).

6. A cooling device according to Claim 5, **characterized in that** the heat exchanger (30) is designed in order to cool engine oil of the internal-combustion engine (3).

7. A cooling device according to one or more of the preceding Claims 5 or 6, **characterized in that** the heat exchanger (30) comprises a cooling-water outlet line (31) which is attached to the return line (19).

## Revendications

1. Dispositif de refroidissement (2) d'un moteur à combustion interne (3), installé dans un véhicule automobile, notamment un véhicule léger, dispositif de refroidissement (2) présentant plusieurs radiateurs (7, 8, 9) disposés dans l'espace avant (1) du véhicule automobile et reliés au moteur à combustion interne (3) par des conduites, **caractérisé en ce que** le dispositif de refroidissement (2) comprend dans l'espace avant (1) un radiateur s'étendant de manière transversale par rapport à la direction longitudinale du véhicule (A-A) et deux radiateurs latéraux s'étendant de manière inclinée par rapport à un plan longitudinal central (B-B) (7, 8 et 9), les radiateurs (7, 8 et 9) étant raccordés par l'intermédiaire d'un dispositif collecteur (17) présentant des conduites de sortie d'eau de refroidissement (14, 15 et 16) à une conduite d'alimentation (18) commune reliée au moteur à combustion interne, et **en ce qu'**en aval du moteur à combustion interne une conduite de retour (19) est prévue qui est raccordée à un dispositif de dérivation (20) duquel partent des conduites de retour d'eau de refroidissement (21, 22 et 23) vers les radiateurs (7, 8 et 9).

2. Dispositif de refroidissement selon la revendication 1, **caractérisé en ce que** les conduites de sortie d'eau de refroidissement (14, 15 et 16) et le dispositif collecteur (17) s'étendent au voisinage du radiateur central (8), tandis que les conduites de retour d'eau de refroidissement (14, 15 et 16) et le dispositif de dérivation (20) s'étendent à distance des conduites de sortie d'eau de refroidissement (14, 15 et 16) et du dispositif collecteur (17).

3. Dispositif de refroidissement d'un moteur à combustion interne selon l'une ou plusieurs des revendications précédentes, comprenant des rangées de cylindres (5, 6) situées en regard l'une de l'autre et une pompe à eau (24) transportant l'eau de refroidissement du dispositif de refroidissement, **caractérisé en ce que** la pompe à eau (24) est montée dans la conduite d'alimentation (18), en aval de la pompe à eau (24) des conduites d'alimentation des cylindres (22 et 23) séparées étant prévues pour les rangées de cylindres (5, 6), les conduites d'alimentation des cylindres (22 et 23) s'étendant entre les rangées de cylindres.

4. Dispositif de refroidissement selon la revendication 3, **caractérisé en ce qu'**à l'extérieur des rangées de cylindres (5, 6) des conduites de sortie d'eau de refroidissement (27, 28) sont prévues, qui sont reliées à la conduite de retour (19).

5. Dispositif de refroidissement selon l'une ou plusieurs des revendications précédentes 3 ou 4, **caractérisé en ce que** de la pompe à eau (24) part une conduite d'alimentation secondaire (29), qui est reliée à un échangeur thermique (30).

6. Dispositif selon la revendication 5, **caractérisé en ce que** l'échangeur thermique (30) est conçu pour refroidir l'huile de moteur du moteur à combustion interne (3).

7. Dispositif de refroidissement selon l'une ou plusieurs des revendications précédentes 5 ou 6, **caractérisé en ce que** l'échangeur thermique (30) comprend une conduite de sortie d'eau de refroidissement (31), qui est raccordée à la conduite de retour (19).
